# EUROPÄISCHE PATENTSCHRIFT

(11) **EP 2 567 777 B1**
(45) Veröffentlichungstag und Bekanntmachung des Hinweises auf die Patenterteilung: **19.03.2014**
(21) Anmeldenummer: 11405317.6
(22) Anmeldetag: 08.09.2011
(51) Int. Cl.: B23Q 1/54, B23Q 1/60

(54) **Bearbeitungsvorrichtung und Rundschalttisch**
Processing device and rotary indexing table
Dispositif de traitement et table à transfer circulaire

(43) Veröffentlichungstag der Anmeldung: 13.03.2013
(73) Patentinhaber: K.R. Pfiffner AG, Utzenstorf, 3427 Utzenstorf (CH)
(72) Erfinder: Op de Hipt, Michael, 2533 Evilard (CH); Aeby, Daniel, 2562 Port (CH)
(74) Vertreter: EGLI-EUROPEAN PATENT ATTORNEYS

(56) Entgegenhaltungen:
- EP-A1- 0 664 176
- DE-A1- 10 061 934

## Beschreibung

Die vorliegende Erfindung betrifft eine Bearbeitungsvorrichtung gemäss Patentanspruch 1. Insbesondere handelt es sich dabei um eine Bearbeitungsvorrichtung zur Bearbeitung von Werkstücken einer Rundtaktmaschine mit Bearbeitungstisch.

Rundtaktmaschinen sind Werkzeugmaschinen, bei denen sich ein zentraler Bearbeitungstisch um eine Schaltachse gesteuert drehen kann. Bei bekannten Rundtaktmaschinen sind die Werkstückaufnahmevorrichtungen, d.h. diejenigen Vorrichtungen, in welchen die Werkstücke festgehalten werden, auf dem drehbaren Bearbeitungstisch angeordnet. Konzentrisch dazu sind ausserhalb des drehbaren Bearbeitungstisches mehrere Bearbeitungsvorrichtungen ortsfest angeordnet. Im Betrieb wird der Bearbeitungstisch zur Bearbeitung der Werkstücke von einer Bearbeitungsvorrichtung zur nächsten weiter gedreht bzw. weiter geschaltet. Auf diese Weise wird ein einzelnes Werkstück stufenweise zur Weiterbearbeitung an eine nächste Bearbeitungsvorrichtung weiter geschaltet. Ein Werkstück wird somit in jeder Schaltstation einer bestimmten Bearbeitung (Bohren, Fräsen, Gewindeschneiden usw.) unterworfen und am Ende fertig bearbeitet abgegeben.

Diese bekannten Rundtaktmaschinen eignen sich für die Bearbeitung mehr oder weniger komplexer Werkstücke, welche in grossen Serien herzustellen sind. In der Regel sind etwa acht oder mehr Stationen an jeder Maschine vorhanden, d.h. es können acht oder mehr verschiedene Bearbeitungsvorgänge an einem Werkstück durchgeführt werden. Da in den meisten Fällen eine Bearbeitung der Werkstücke von mehreren Seiten notwendig ist, ist es aus dem Stand der Technik bekannt, die Rundtaktmaschinen mit Schwenkmodulen auszustatten, um die zu bearbeitenden Werkstücke derart zu verschwenken, dass alle zu bearbeitenden Seiten des Werkstückes für die Bearbeitungsvorrichtungen zugänglich sind. Dementsprechend ist es üblich, die besagten Schwenkmodule an den Werkstückaufnahmevorrichtungen, welche zum Festhalten der Werkstücke dienen, vorzusehen. Somit wird bei den aus dem Stand der Technik bekannten Rundtaktmaschinen das Werkstück in Relation zu dem Werkzeug der Bearbeitungsvorrichtung bewegt, um somit das Werkstück gegenüber der Bearbeitungsvorrichtung auszurichten.

In diesem Zusammenhang sei auf die DE 199 55 184 A1 hingewiesen, welche eine Rundtaktmaschine 1 mit mehreren umfangseitig angeordneten Schwenkmodulen 10, 40 zeigt, deren Schwenkkopf 16 jeweils in einem Winkel von 45° zur Ebene geneigt am Körper des Schwenkmoduls gelagert ist. Die einzelnen Schwenkköpfe 16 halten ein Werkstück 70 eingespannt. Die Anordnung der einzelnen Schwenkmodule 10, 40 erlaubt ein Schwenken des Werkstücks 70 in alle Richtungen, so dass sein distales Ende durch ein vom Schwenkmodul getrenntes Werkzeug von allen Seiten bearbeitet werden kann.

Ferner ist aus der DE 41 02 734 A1 ein Schwenkmodul wie in der DE 199 55 184 A1 zu entnehmen, wobei dieses Schwenkmodul jedoch in einer Einzelausführung, d.h. ohne Einbindung in eine Rundtaktmaschine, dargestellt ist.

Schliesslich zeigt die DE 103 51 694 A1 eine Klemmvorrichtung, welche insbesondere zum Einsatz bei einer Rundtaktmaschine vorgesehen ist. Diese Rundtaktmaschine enthält eine Mehrzahl von Schwenkmodulen 20, welche gleich der Ausführung in der D1 am Umfang eines Bearbeitungstisches 14 angeordnet sind. Auch hier dienen die Schwenkmodule 20 zum Einspannen und Ausrichten von einem Werkstück.

In der europäischen Patentanmeldeschrift EP 0 664 176 A1 wird eine Fräs- und Bohrmaschine beschrieben, die einen Schwenkfräskopf zum automatischen Umrüsten von einer Horizontal- auf eine Vertikalbearbeitung aufweist. Der Antrieb der Antriebsspindel erfolgt durch einen Antriebsmotor über Kegelräder und ein Schaltgetriebe. Der Schwenkfräskopf ist an einer um 45° nach unten geneigten Stirnfläche eines Traggehäuses montiert.

In der deutschen Offenlegungsschrift DE 100 61 934 A1 wird eine Fräs- und Bohrmaschine mit einer Bearbeitungseinheit beschrieben, wobei die Bearbeitungseinheit in Führungen motorisch gegenüber dem Maschinenständer in mehreren Koordinatenachsen verfahrbar ist. Die Bearbeitungseinheit weist einen Spindelkopf mit integriertem Drehantrieb für die Arbeitsspindel auf.

Bei den oben genannten, aus dem Stand der Technik bekannten Rundtaktmaschinen mit verschwenkbaren Werkstücken stellt es sich als problematisch heraus, dass oftmals nur Werkstücke mit sehr simplen Geometrien gefertigt werden können. Darüber hinaus können die teils schweren Werkstücke die Schwenkbewegung beeinflussen. Insbesondere ist es dadurch oftmals nicht möglich, das Werkstück mit der gewünschten Präzision zu verschwenken, weshalb es mit den aus dem Stand der Technik bekannten Rundtaktmaschinen schwierig ist, konstante Schnittparameter zu gewährleisten.

Ausgehend von dieser Problemstellung ist es die Aufgabe der Erfindung, eine Bearbeitungsvorrichtung anzugeben, welche gegenüber den Werkstücken einer Rundtaktmaschine verschwenkbar ist und eine hohe Konturtreue bzw. konstante Schnittparameter gewährleistet. Darüber hinaus soll es durch die erfindungsgemässe Bearbeitungsvorrichtung möglich sein, Werkstücke mit neuen, komplexeren Teile-geometrien zu fertigen.

Diese Aufgabe wird erfindungsgemäss durch den Gegenstand des unabhängigen Patentanspruches 1 gelöst.

Demgemäss betrifft die Erfindung eine Bearbeitungsvorrichtung zur Bearbeitung von Werkstücken einer Rundtaktmaschine mit Bearbeitungstisch. Die erfindungsgemässe Bearbeitungsvorrichtung weist dabei einen Grundkörper auf, welcher sich entlang einer zum Bearbeitungstisch geneigt ausgerichteten Hauptachse erstreckt und eine Getriebeanordnung mit einer senkrecht zur Hauptachse ausgerichteten Schwenk-/Antriebsachse aufweist. Ferner weist die Bearbeitungsvorrichtung einen Schwenkkopf auf, welcher an einer dem Werkstück zugewandten Position am Grundkörper schwenkbar gelagert ist und entlang der Schwenk-/Antriebsachse des Grundkörpers ausgerichtet ist. Zusätzlich umfasst die erfindungsgemässe Bearbeitungsvorrichtung einen Werkzeughalter, welcher mit dem Schwenkkopf verbunden ist und dazu ausgelegt ist, mindestens einen Werkzeugeinsatz zur Bearbeitung der Werkstücke aufzunehmen. Der Werkzeughalter ist derart an einem Umfang des Schwenkmoduls angebracht, dass eine Längsachse des Werkzeughalters geneigt gegenüber der Schwenk-/Antriebsachse angeordnet ist. Ferner weist die Bearbeitungsvorrichtung mindestens einen Werkzeugeinsatz zur Bearbeitung der Werkstücke auf, welcher derart von dem Werkzeughalter aufgenommen ist, dass eine Spitze des Werkzeugeinsatzes im Schnittpunkt der Längsachse des Werkzeughalters mit der Schwenk-/Antriebsachse liegt.

Die erfindungsgemässe Bearbeitungsvorrichtung weist eine Vielzahl von Vorteilen auf. So ist es, wie oben bereits erwähnt, durch die erfindungsgemässe Bearbeitungsvorrichtung vorteilhafterweise möglich, Werkstücke mit neuen komplexeren Teilegeometrien zu fertigen. Darüber hinaus kann das Schwenkmodul der erfindungsgemässen Bearbeitungsvorrichtung sehr genau und schnell verschwenkt werden. Zusätzlich wird durch die Bearbeitungsvorrichtung garantiert, dass der Tool-Center-Point und die Orientierung des Werkzeugeinsatzes relativ zum Werkstück während der Schwenkbewegung konstant bleiben, wodurch konstante Schnittparameter erzielbar sind. Schliesslich sei erwähnt, dass die erfindungsgemässe Bearbeitungsvorrichtung nicht nur dazu geeignet ist, Werkstücke einer Rundtaktmaschine zu bearbeiten, vielmehr kann diese selbstverständlich auch zur Bearbeitung von Werkstücken auf einer Lineartransfermaschine eingesetzt werden. Beispielsweise beträgt der Winkel zwischen der Ebene des Bearbeitungstisches und der Hauptachse gleich einem Winkel von 45°.

Durch die gegenüber der Schwenk-/Antriebsachse geneigte Anbringung des Werkzeughalters am Umfang des Schwenkkopfes ist es möglich, die Längsachse des Werkzeughalters entlang der Oberfläche eines Kegelmantels gegenüber der Schwenkachse zu verfahren. Dementsprechend ist es vorteilhafterweise möglich, mit einer erfindungsgemässen Bearbeitungsvorrichtung das Werkstück aus mehreren Richtungen zu bearbeiten. Insbesondere ist es demnach durch einzelne kurze Schwenkbewegungen möglich, das Werkstück senkrecht, parallel oder schräg zur Ebene des Bearbeitungstisches mit nur einer Bearbeitungsvorrichtung zu bearbeiten. Beispielsweise beträgt der Winkel 45°, so dass die Längsachse des Werkzeughalters in einem Winkel von 45° gegenüber der Schwenk-/Antriebsachse angeordnet ist.

Dadurch, dass die Aufnahme des Werkzeugeinsatzes im Werkzeughalter derart erfolgt, dass eine Spitze des Werkzeugeinsatzes im Schnittpunkt der Längsachse des Werkzeughalters mit der Schwenk-/Antriebsachse liegt wird, wie oben bereits erwähnt, bei einem vollständigen Schwenken des Schwenkkopfes um die Schwenkachse herum eine virtuelle Verlängerung der Längsachse des Werkzeughalters einen Kegelmantel beschreiben, wobei die Spitze des Kegels (d.h. Spitze des Werkzeugeinsatzes) in dem Schnittpunkt der beiden Achsen zu finden ist. Demnach wird durch das Verschwenken des Schwenkmoduls lediglich die Ausrichtung des Werkzeughalters bzw. des Werkzeugeinsatzes verändert, während die Spitze des Werkzeugeinsatzes (Tool-Center-Point) fortwährend im Schnittpunkt der Längsachse des Werkzeughalters mit der Schwenkachse liegt. Die Winkellage und/oder räumliche Orientierung der Spitze des Werkzeugeinsatzes (Tool-Center-Point) relativ zum Werkstück bleibt folglich konstant, wodurch konstante Schnittparameter gewährleistet werden. Mit anderen Worten erlaubt es diese Anordnung, dass ein jeglicher Punkt des Werkstückes, welcher sich im Verfahrbereich und/oder in der Reichweite der erfindungsgemässen Bearbeitungsvorrichtung befindet, durch das Schwenken des Schwenkkopfes von allen Seiten erreichbar ist. Durch diese hervorragende Zugänglichkeit ist eine aussergewöhnlich flexible Werkstückbearbeitung möglich. Ein weiterer Vorteil besteht darin, dass der Bearbeitungsbereich wenig Raum benötigt. Mit anderen Worten befindet sich die Bearbeitungsstelle sehr nah an dem Schwenkmodul. Dieser Vorteil kommt insbesondere beim Einsatz in einer Rundtaktmaschine zum Tragen.

Vorteilhafte Weiterbildungen der erfindungsgemässen Bearbeitungsvorrichtung sind in den Unteransprüchen angegeben.

In einer Ausgestaltung kann die Bearbeitungsvorrichtung derart ausgebildet sein, dass der mindestens eine Werkzeugeinsatz entlang der Längsachse des Werkzeughalters verfahren werden kann. Auf diese Weise ist es insbesondere möglich, das Werkzeug gegenüber dem Werkstück zu verfahren. Somit ist es beispielsweise möglich, unterschiedliche Bohrtiefen bzw. verschiedenste Fräspositionen einzustellen, Alternativ oder zusätzlich kann eine Werkstückaufnahmevorrichtung zur Aufnahme des Werkstücks einen Hub ausführen, um das Werkstück näher an den Werkzeugbereich heran zu bringen.

Es ist besonders vorteilhaft, wenn die Bearbeitungsvorrichtung dazu ausgebildet ist, den Werkzeugeinsatz hydraulisch oder elektrisch entlang der Längsachse des Werkzeughalters zu verfahren. Insbesondere werden durch diese Betätigungsmittel (Hydraulik, Elektrik) eine hohe Ansteuergeschwindigkeit sowie ein fast unbegrenzter Verfahrungsweg ermöglicht. Ferner weisen diese beiden Antriebsmöglichkeiten ein sehr geringes Gewicht sowie einen geringen Platzbedarf auf.

Gemäss einer besonders vorteilhaften Ausführungsform weist der Werkzeughalter mindestens ein Schlittenelement auf, welches dazu ausgelegt ist, den Werkzeugeinsatz entlang der Längsachse des Werkzeughalters zu verfahren. Alternativ kann der Werkzeughalter jedoch auch mindestens eine Nutwelle aufweisen, welche dazu ausgelegt ist, den Werkzeugeinsatz entlang der Längsachse des Werkzeughalters zu verfahren. Beide Alternativen stellen Varianten zum Verfahren des Werkzeugeinsatzes dar, welche eine schnelle und genaue Bewegung des Werkzeugeinsatzes garantieren. In diesem Zusammenhang sei auch auf die Erläuterungen in der Figurenbeschreibung verwiesen.

Gemäss einer weiteren Ausführungsform der erfindungsgemässen Bearbeitungsvorrichtung weist die Getriebeanordnung des Grundkörpers mindestens eine Schwenkwelle zum Schwenken des Schwenkkopfes sowie mindestens eine Antriebswelle zum Antreiben eines Werkzeugeinsatzes auf und ist zum Antreiben der mindestens einen Schwenkwelle sowie der mindestens einen Antriebswelle ausgebildet. Dementsprechend wird nicht nur das Verschwenken des Schwenkkopfes von der Getriebeanordnung des Grundkörpers übernommen, sondern die Getriebeanordnung dient ferner dazu, die Antriebswelle zum Antreiben eines Werkzeugeinsatzes anzusteuern. Ein wesentlicher Vorteil besteht darin, dass hierdurch ein separater Motor in dem am Schwenkkopf angebrachten Werkzeughalter eingespart werden kann. Folglich weist der Werkzeughalter der erfindungsgemässen Bearbeitungsvorrichtung ein sehr geringes Gewicht auf, wodurch die Geschwindigkeit und Präzision beim Verschwenken des Schwenkkopfes bzw. des Werkzeughalters sehr stark verbessert wird.

Die Getriebeanordnung der erfindungsgemässen Bearbeitungsvorrichtung weist ferner eine erste Klemmvorrichtung zum Festlegen der mindestens einen Antriebswelle, sowie eine zweite Klemmvorrichtung zum Festlegen der mindestens einen Schwenkwelle auf. Mittels der ersten und zweiten Klemmvorrichtung kann durch Ausübung einer mechanischen Kraft der Klemmvorrichtungen auf die Antriebswelle/Schwenkwelle jeweils eine der Wellen angetrieben werden, während die andere Welle durch die Klemmvorrichtung festgelegt wird. Somit wird vorteilhafterweise gewährleistet, dass stets lediglich eine Welle in Betrieb ist. Im Einzelnen ist es dadurch beispielsweise nicht möglich, dass der Schwenkkopf während der Bearbeitung des Werkstückes durch den Werkzeugeinsatz versehentlich verschwenkt wird. Mit anderen Worten ist während der Bearbeitung lediglich die Antriebswelle aktiv, während die Schwenkwelle festgelegt ist. Erst nachdem der individuelle Bearbeitungsschritt beendet ist, wird die Antriebswelle und damit der Werkzeugeinsatz festgelegt und durch Ansteuerung der Schwenkwelle der Schwenkkopf verschwenkt, um die Bearbeitungsvorrichtung auf einen neuen Bearbeitungsvorgang einzustellen. Selbstverständlich ist es jedoch auch denkbar, dass im Sinne spezieller Bearbeitungsmethoden beide Wellen, d.h. die Antriebswelle sowie die Schwenkwelle, gleichzeitig betrieben werden können.

Nach einer weiteren Umsetzung der erfindungsgemässen Bearbeitungsvorrichtung weist die erste Klemmvorrichtung einen ersten Zustand, in welchem die mindestens eine Antriebswelle frei rotierbar ist, sowie einen zweiten Zustand, in welchem die mindestens eine Antriebswelle unbeweglich festgelegt ist, auf. Dabei ist die erste Klemmvorrichtung derart ausgebildet, so dass sie durch Anlegen einer hydraulischen oder pneumatischen Druckkraft vom ersten Zustand in den zweiten Zustand überführt werden kann. Mit anderen Worten ist die Antriebswelle in der Grundeinstellung der ersten Klemmvorrichtung frei rotierbar. Erst nach Ansteuerung der ersten Klemmvorrichtung durch eine hydraulische oder pneumatische Druckkraft wird diese in ihren zweiten Zustand überführt, um die Antriebswelle festzulegen. Es bedarf folglich grundsätzlich keiner Ansteuerung der ersten Klemmvorrichtung, um die Antriebswelle zu bewegen. Dementsprechend ist es lediglich für den kurzen Moment des Verschwenkens durch den Schwenkkopf nötig, die erste Klemmvorrichtung in den zweiten Zustand zu überführen und damit die Antriebswelle festzulegen.

Gemäss eines ähnlichen Aspekts der erfindungsgemässen Bearbeitungsvorrichtung weist die zweite Klemmvorrichtung einen ersten Zustand, in welchem die mindestens eine Schwenkwelle unbeweglich festgelegt ist, sowie einen zweiten Zustand, in welchem die mindestens eine Schwenkwelle frei rotierbar ist, auf. Dabei ist die zweite Klemmvorrichtung derart ausgebildet, dass sie durch Anlagen einer hydraulischen oder pneumatischen Druckkraft vom ersten Zustand in den zweiten Zustand überführt werden kann. Dementsprechend ist die zweite Klemmvorrichtung genau gegenteilig zur ersten Klemmvorrichtung ausgebildet. Im Einzelnen bedeutet dies, dass die mindestens eine Schwenkwelle solange unbeweglich festgelegt ist, bis die zweite Klemmvorrichtung von ihrem ersten Zustand in den zweiten Zustand überführt wird. Anders ausgedrückt ist die zweite Klemmvorrichtung vorgespannt um die mindestens eine Schwenkwelle im Normalzustand unbeweglich festzulegen. Erst nach Beendigung eines individuellen Bearbeitungsschrittes wird die zweite Klemmvorrichtung durch eine hydraulische oder pneumatische Druckkraft in ihren zweiten Zustand überführt, um ein Rotieren der Schwenkwelle und damit ein Verschwenken des Schwenkkopfes zu ermöglichen.

Gemäss einer alternativen Ausführungsform der erfindungsgemässen Bearbeitungsvorrichtung weist die Getriebeanordnung einen Hohlwellenantrieb zum Antreiben der mindestens einen Schwenkwelle sowie der mindestens einen Antriebswelle auf. Das Vorziehen eines Hohlwellenantriebs hat den Vorteil, dass die Konstruktion der Getriebeanordnung wesentlich vereinfacht wird und die Produktivität der erfindungsgemässen Bearbeitungsvorrichtung deutlich erhöht wird. Ferner ermöglicht die Hohlwelle eine produktive Positionierung des Schwenkkopfes an vorbestimmten absoluten Positionen mit einer Genauigkeit von +/- 20 Winkelminuten.

Nach einer weiteren Ausführungsform weist die erfindungsgemässe Bearbeitungsvorrichtung ein Umlenkgetriebe auf, welches dazu ausgebildet ist, ein Drehmoment der mindestens einen Antriebswelle auf den mindestens einen Werkzeugeinsatz zu übertragen. Durch das Umlenkgetriebe kann auf einen weiteren Motor innerhalb des Werkzeughalters verzichtet werden. Das Umlenkgetriebe erstreckt sich vorzugsweise vom Schwenkkopf zum Werkzeughalter. Insbesondere kann es sich bei dem Umlenkgetriebe um ein Kronenrand-bzw. Kegelradgetriebe handeln. Somit ist es auf einfache Weise möglich, das Drehmoment der Antriebswelle auf den mindestens einen Werkzeugeinsatz zu übertragen. Insbesondere kann durch das Umlenkgetriebe die Drehzahl des Werkzeugeinsatzes genau bestimmt werden.

Nach einem weiteren Aspekt der erfindungsgemässen Bearbeitungsvorrichtung ist der Grundkörper zum translatorischen Verfahren der Bearbeitungsvorrichtung gegenüber dem Bearbeitungstisch lösbar an einer Führungsvorrichtung befestigt. Insbesondere kann die Führungsvorrichtung dazu verwendet werden, den Grundkörper und damit die Bearbeitungsvorrichtung in allen drei Raumrichtungen zu verfahren. Somit ist es auf einfache Weise möglich, die erfindungsgemässe Bearbeitungsvorrichtung gegenüber dem Werkstück auszurichten. Durch die lösbare Verbindung des Grundkörpers mit der Führungsvorrichtung kann die erfindungsgemässe Bearbeitungsvorrichtung für Reparaturzwecke schnell und einfach von der Führungsvorrichtung entfernt werden.

Vorzugsweise ist der Grundkörper unter einem Winkel von 45° zum Bearbeitungstisch geneigt ausgerichtet. Dieser Winkel von 45° stellt sich hierbei zwischen der Ebene des Bearbeitungstisches und der Hauptachse der Grundkörpers, in einer Richtung entlang zur Getriebeanordnung, ein. Dieser Winkel erlaubt insgesamt einen einfachen Aufbau der Bearbeitungsvorrichtung.

Vorzugsweise ist die Längsachse des Werkzeughalters in einem Winkel von 45° gegenüber der Schwenk-/Antriebsachse angeordnet. Auch dieser Winkel erlaubt insgesamt einen einfachen Aufbau der Bearbeitungsvorrichtung.

Die vorstehend genannte Aufgabe wird ebenso durch eine Rundtaktmaschine zur Bearbeitung von einem oder mehreren Werkstücken in einem oder mehreren Bearbeitungsschritten gelöst. Die Rundtaktmaschine weist einen Bearbeitungstisch sowie mindestens eine Bearbeitungsvorrichtung nach einem der Ansprüche 1 bis 14 auf.

Im Folgenden wird die erfindungsgemässe Bearbeitungsvorrichtung mit Bezug auf die in den Figuren dargestellten Ausführungsbeispiele näher erläutert.

Dabei zeigen:
- Fig. 1a: perspektivische Darstellung einer ersten Ausführungsform der erfindungsgemässen Bearbeitungsvorrichtung;
- Fig. 1b: perspektivische Darstellung einer zweiten Ausführungsform der erfindungsgemässen Bearbeitungsvorrichtung;
- Fig. 2a: perspektivische Darstellung der ersten Ausführungsform nach Fig. 1a mit Schwenkkopf im Winkel von 0°;
- Fig. 2b: perspektivische Darstellung der ersten Ausführungsform nach Fig. 1a mit Schwenkkopf im Winkel von 90°;
- Fig. 2c: perspektivische Darstellung der ersten Ausführungsform nach Fig. 1a mit Schwenkkopf im Winkel von 180°;
- Fig. 3a: perspektivische Darstellung der zweiten Ausführungsform nach Fig. 1b mit Schwenkkopf im Winkel von 0°;
- Fig. 3b: perspektivische Darstellung der zweiten Ausführungsform nach Fig. 1b mit Schwenkkopf im Winkel von 90°;
- Fig. 3c: perspektivische Darstellung der zweiten Ausführungsform nach Fig. 1b mit Schwenkkopf im Winkel von 180°;
- Fig. 4a: Bearbeitung eines Werkstücks mit einer Bearbeitungsvorrichtung der ersten Ausführungsform mit Schwenkkopf im Winkel von 180°;
- Fig. 4b: Bearbeitung eines Werkstücks mit einer Bearbeitungsvorrichtung der ersten Ausführungsform mit Schwenkkopf im Winkel von 90°;
- Fig. 5a: perspektivische Darstellung einer dritten Ausführungsform der erfindungsgemässen Bearbeitungsvorrichtung mit verfahrbarem Werkzeughalter;
- Fig. 5b: perspektivische Darstellung einer vierten Ausführungsform der erfindungsgemässen Bearbeitungsvorrichtung mit verfahrbarem Werkzeughalter;
- Fig. 5c: perspektivische Darstellung einer fünften Ausführungsform der erfindungsgemässen Bearbeitungsvorrichtung mit verfahrbarem Werkzeughalter;
- Fig. 5d: perspektivische Darstellung einer sechsten Ausführungsform der erfindungsgemässen Bearbeitungsvorrichtung mit verfahrbarem Werkzeughalter;
- Fig. 5e: perspektivische Darstellung eines verfahrbaren Wellengetriebes gemäss Fig. 5d;
- Fig. 6: perspektivische Darstellung einer Ausführungsform eines Grundkörpers der erfindungsgemässen Bearbeitungsvorrichtung;
- Fig. 7: Querschnitt durch eine erfindungsgemässe Antriebsanordnung;
- Fig. 8: perspektivische Schnittdarstellung einer erfindungsgemässen Bearbeitungsvorrichtung mit Hohlwellenantrieb;
- Fig. 9a: perspektivische Darstellung des Schwenkkopfes mit Werkzeughalter gemäss der ersten Ausführungsform nach Fig. 1a;
- Fig. 9b: Querschnitt durch einen Schwenkkopf mit Werkzeughalterung gemäss der ersten Ausführungsform nach Fig. 1a;
- Fig. 10: perspektivische Darstellung eines Schwenkkopfes mit Werkzeughalterung gemäss der zweiten Ausführungsform nach Fig. 1b;
- Fig. 11a: perspektivische Darstellung von oben auf eine erfindungsgemässe Rundtaktmaschine; und
- Fig. 11b: perspektivische Seitenansicht der in Fig. 11a dargestellten Rundtaktmaschine.

In der folgenden detaillierten Figurenbeschreibung sind gleiche oder gleich wirkende Bauteile aus Gründen der Übersichtlichkeit mit gleichen Bezugszeichen versehen.

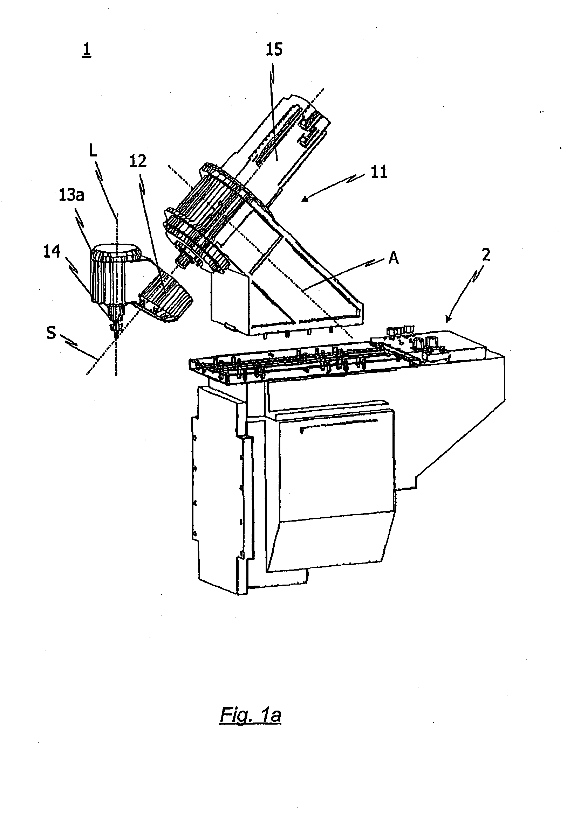

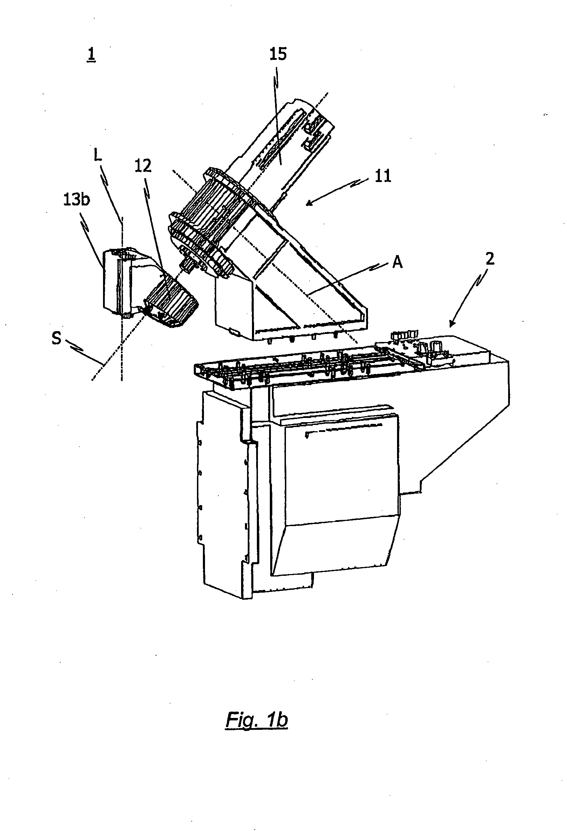

In den Figuren 1a und 1b sind erste und zweite Ausführungsformen einer erfindungsgemässen Bearbeitungsvorrichtung 1 dargestellt. Im einzelnen unterscheidet sich die zweite Ausführungsform gemäss Fig. 1b von der ersten Ausführungsform gemäss Fig. 1a lediglich durch die Ausgestaltung des Werkzeughalters 13a bzw. 13b, wie später näher erläutert werden wird. Die in den Figuren 1a und 1b dargestellten Bearbeitungsvorrichtungen 1 dienen dazu, Werkstücke einer Rundtaktmaschine mit Bearbeitungstisch (nicht dargestellt) zu bearbeiten. Selbstverständlich ist es jedoch auch denkbar, dass die erfindungsgemässe Bearbeitungsvorrichtung 1 zur Bearbeitung von Werkstücken entlang einer linearen Transfermaschine benutzt wird.

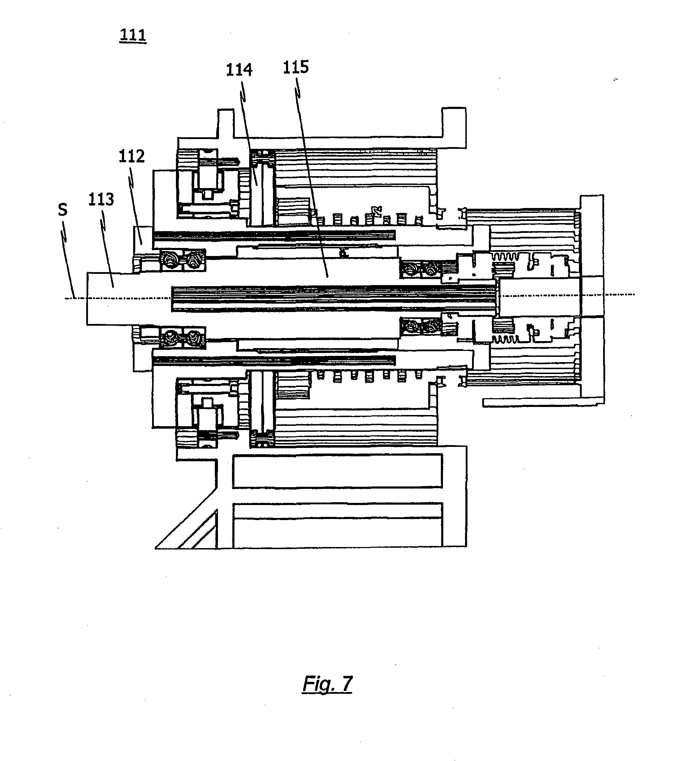

Die Bearbeitungsvorrichtung gemäss Fig. 1a, 1b weist insbesondere einen Grundkörper 11 auf, welcher sich entlang einer unter 45° zum Bearbeitungstisch ausgerichteten Hauptachse A erstreckt. Anders ausgedrückt erstreckt sich die Hauptachse unter einem Winkel von ca. 45° gegenüber einer horizontalen Ebene, in welcher die Oberfläche des Bearbeitungstisches liegt. Innerhalb des Grundkörpers 11 befindet sich eine Getriebeanordnung (111, Fig. 7), welche eine senkrecht zur Hauptachse A ausgerichtete Schwenk-/Antriebsachse S aufweist. Ferner kann der Darstellung gemäss den Figuren 1a und 1b entnommen werden, dass die erfindungsgemässe Bearbeitungsvorrichtung 1 einen Schwenkkopf 12 aufweist, welcher an einer dem Werkstück zugewandten Position am Grundkörper 11 schwenkbar gelagert ist. Insbesondere ist der Schwenkkörper 12 entlang der Schwenk-/Antriebsachse S des Grundkörpers 11 ausgerichtet. Wie später erläutert werden wird, ist es möglich, den Schwenkkopf 12 im Betrieb der Bearbeitungsvorrichtung 1 um vorzugsweise 360° um die Schwenk-/Antriebsachse S zu verschwenken. Die erfindungsgemässe Bearbeitungsvorrichtung 1 weist weiterhin einen Werkzeughalter 13a, 13b auf, welcher mit dem Schwenkkopf 12 verbunden ist und dazu ausgelegt ist, mindestens einen Werkzeugeinsatz 14 zur Bearbeitung der Werkstücke aufzunehmen.

Wie oben bereits erwähnt, unterscheidet sich der in Fig. 1a dargestellte Werkzeughalter 13a von dem in Fig. 1b dargestellten Werkzeughalter 13b. Im Einzelnen handelt es sich bei dem in Fig. 1a dargestellten Werkzeughalter 13a um einen Werkzeughalter, welcher dazu ausgebildet ist, einen Werkzeugeinsatz 14, beispielsweise einen Bohrer oder Fräser, aufzunehmen. Im Gegensatz dazu ist der in Fig. 1b dargestellte Werkzeughalter 13b dazu ausgebildet, zwei Werkzeugeinsätze, beispielsweise Bohrer oder Fräser, aufzunehmen. Je nach Ausführung des Werkzeughalters 13a, 13b, kann also die erfindungsgemässe Bearbeitungsvorrichtung 1 mindestens einen oder mehrere Werkzeugeinsätze 14 zur Bearbeitung der Werkstücke aufweisen.

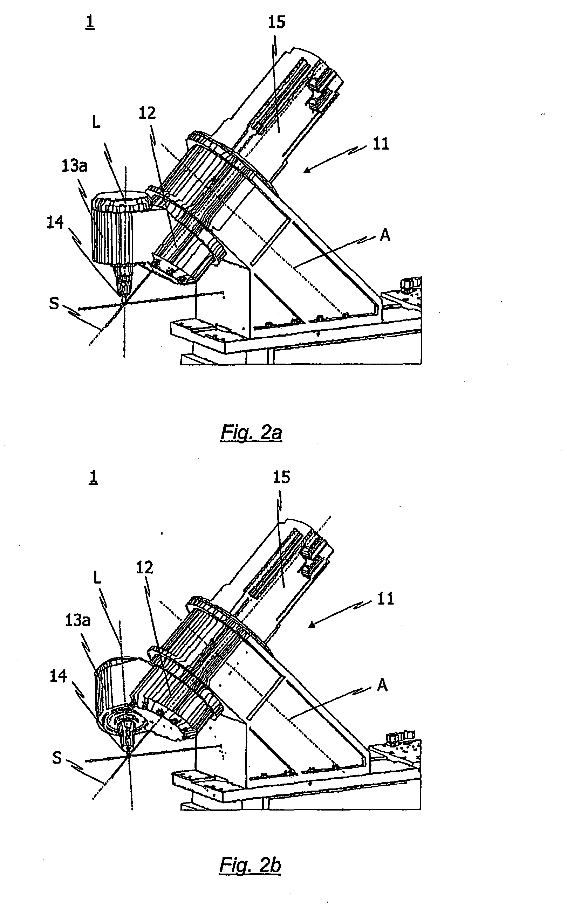

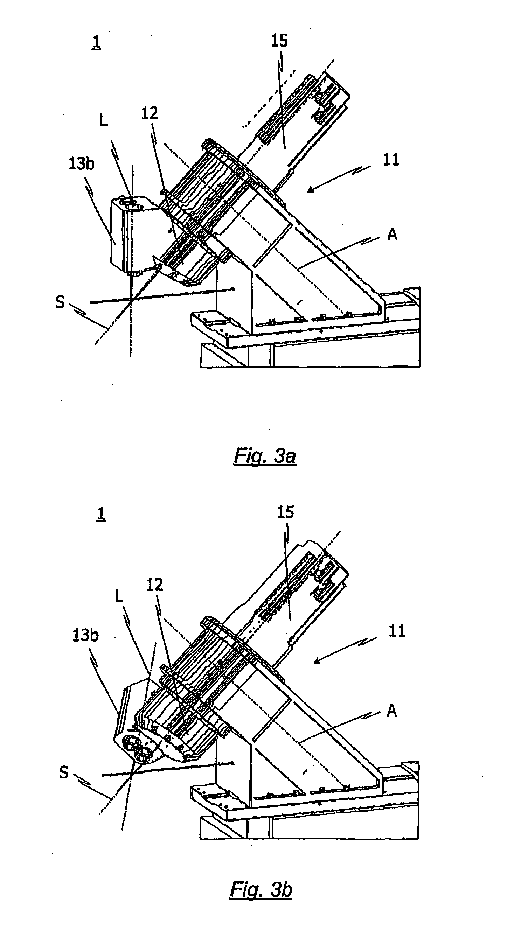

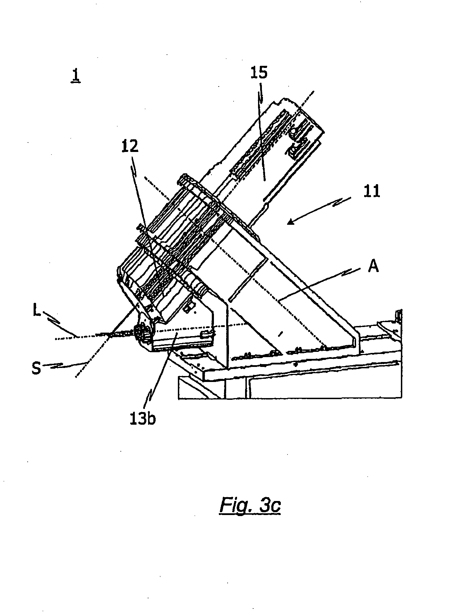

Im weiteren Bezug auf die Figuren 1a und 1b sei angemerkt, dass die Werkzeughalter 13a, 13b unabhängig von ihrer Ausgestaltung derart am Umfang des Schwenkkopfes 12 angebracht sind, dass eine Längsachse L des Werkzeughalters 13a, 13b in einem Winkel von 45° gegenüber der Schwenk-/Antriebsachse S angeordnet ist. Somit ist es, wie in den Figuren 2a bis 2c und 3a bis 3c dargestellt, vorteilhafterweise möglich, das Werkstück mit einer erfindungsgemässen Bearbeitungsvorrichtung 1 aus mehreren Richtungen zu bearbeiten.

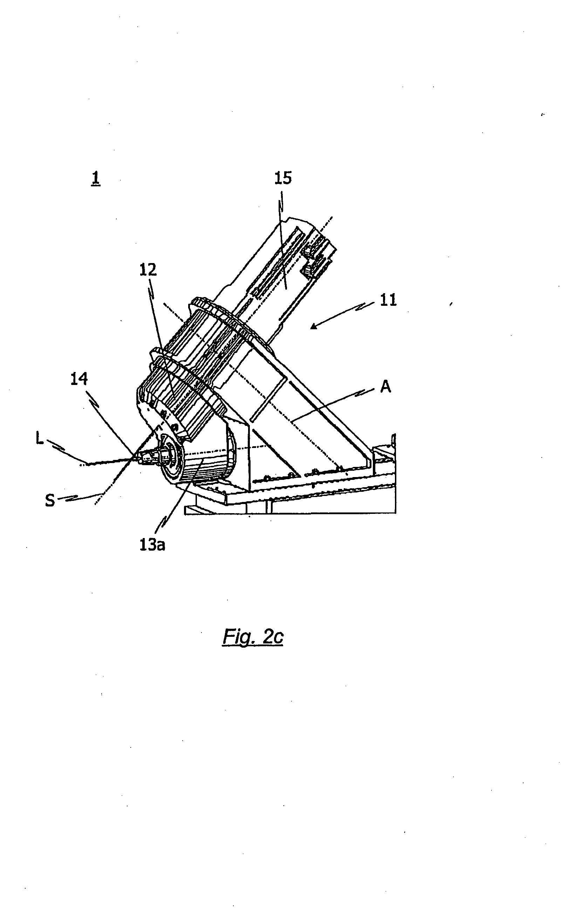

Im Einzelnen ist in den Figuren 2a bis 2c die erste Ausführungsform der erfindungsgemässen Bearbeitungsvorrichtung gemäss Fig. 1a dargestellt, wobei der Schwenkkopf 12 unterschiedliche Positionen aufweist. Insbesondere stellt Fig. 2a eine Bearbeitungsvorrichtung gemäss der ersten Ausführungsform dar, wobei der Schwenkkopf 12 auf einer Winkelposition von 0° angeordnet ist. Es sei hierbei angemerkt, dass es sich bei der Winkelposition von 0° lediglich um eine Definition handelt, bei der die Längsachse L des Werkzeughalters 13 senkrecht auf der Ebene des Bearbeitungstisches steht. Angesichts dieser Definition ist in Fig. 2b eine Bearbeitungsvorrichtung der ersten Ausführungsform dargestellt, bei welcher der Schwenkkopf eine Winkelposition von 90° einnimmt. Die in Fig. 2c dargestellte Winkelposition wird mit 180° bezeichnet, wobei die Längsachse des Werkzeughalters 13 nunmehr in einer Ebene parallel zur Ebene des Bearbeitungstisches liegt. Identische Winkelpositionen des Schwenkkopfes 12 sind den Figuren 3a bis 3c zu entnehmen, wobei es sich bei diesen Darstellungen insbesondere um Ansichten der zweiten Ausführungsform gemäss Fig. 1b in verschiedenen Winkellagen handelt. Obwohl in den Figuren 2a bis 2c sowie 3a bis 3c lediglich die Winkelpositionen 0°, 90°, und 180° dargestellt sind, ist es selbstverständlich vorgesehen, dass der Schwenkkopf 12 sämtliche Winkelpositionen von 0 bis 360°, bis auf kleinste Toleranzen genau, einnehmen kann.

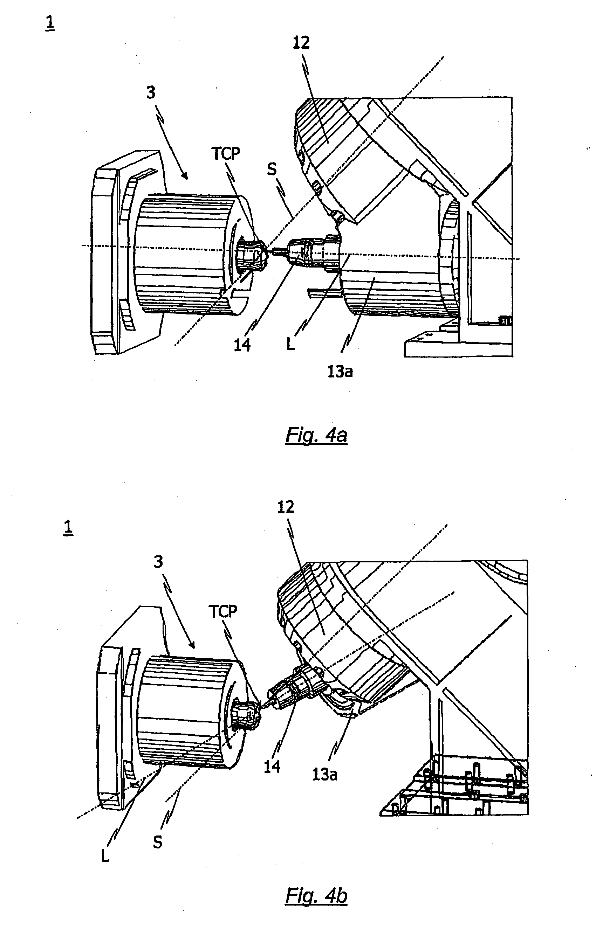

Mit Bezug auf die Figuren 4a und 4b sei erwähnt, dass die erfindungsgemässe Bearbeitungsvorrichtung 1 ferner mindestens einen Werkzeugeinsatz 14 zur Bearbeitung der Werkstücke 3 aufweisen kann. Der Werkzeugeinsatz 14 ist vorzugsweise derart von dem Werkzeughalter 13a, 13b aufgenommen, dass eine Spitze des Werkzeugeinsatzes 14, d.h. der Tool-Center-Point TCP, im Schnittpunkt der Längsachse des Werkzeughalters L mit der Schwenk-/ Antriebsachse S liegt. Somit beschreibt der Werkzeugeinsatz 14 bei einem vollständigen Verschwenken des Schwenkkopfes 12 um die Schwenk-/Antriebsachse S herum einen Kegelmantel, wobei die Spitze des Kegels von der Spitze des Werkzeugeinsatzes 14 gebildet wird. Demnach wird, wie in den Figuren 4a und 4b gezeigt, durch das Verschwenken des Schwenkmoduls 12 lediglich die Ausrichtung der Längsachse des Werkzeughalters L bzw. des Werkzeugeinsatzes 14 verändert, während die Spitze des Werkzeugeinsatzes, d.h. der Tool-Center-Point TCP, fortwährend im Schnittpunkt der Längsachse des Werkzeughalters L mit der Schwenk-/Antriebsachse S liegt. Folglich bleibt die Anordnung der Spitze des Werkzeugeinsatzes 14 relativ zum Mittelpunkt des Werkstücks 3 konstant, wodurch eine hohe Konturtreue und konstante Schnittparameter gewährleistet werden.

Insbesondere zeigen die Figuren 4a und 4b, wie die erfindungsgemässe Bearbeitungsvorrichtung in der ersten Ausführungsform auf einfache Weise, durch Verstellen des Schwenkkopfes 12, dazu genutzt werden kann, ein Werkstück 3 auf verschiedenste Arten zu bearbeiten. Im Einzelnen ist in Fig. 4a dargestellt, wie eine erfindungsgemässe Bearbeitungsvorrichtung 1 dazu genutzt werden kann, eine Bohrung in ein Werkstück 3 vorzusehen, während Fig. 4b dieselbe erfindungsgemässe Bearbeitungsvorrichtung darstellt, welche nunmehr dazu genutzt wird, das Werkstück 3 zu entgraten.

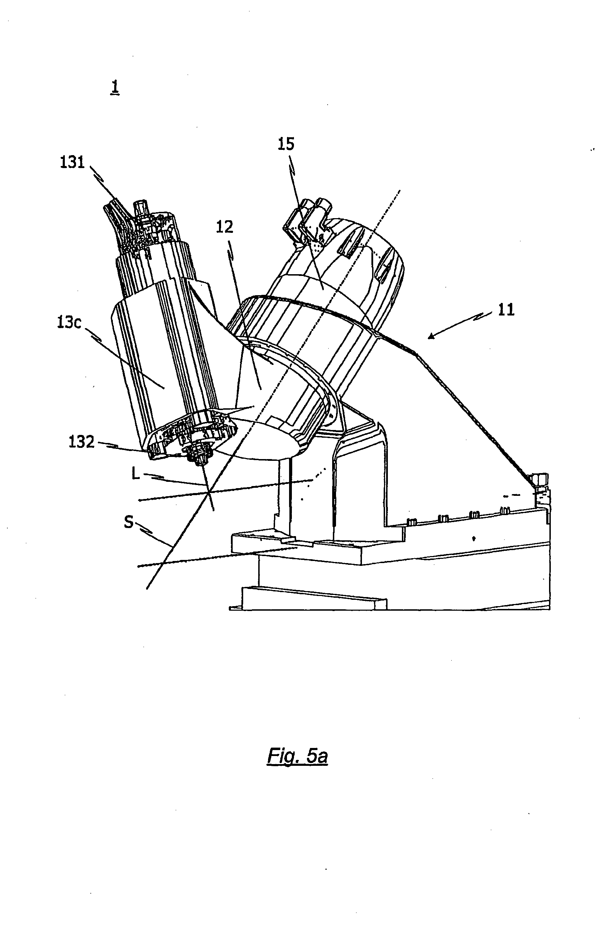

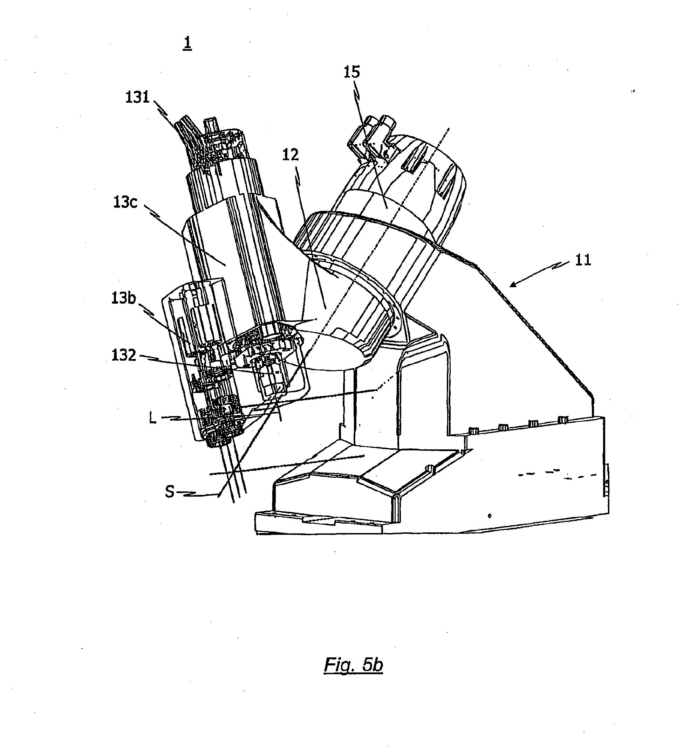

In den Figuren 5a bis 5e sind weitere Ausführungsformen einer erfindungsgemässen Bearbeitungsvorrichtung 1 dargestellt, bei welchen der mindestens eine Werkzeugeinsatz (hier nicht dargestellt) entlang der Längsachse L des Werkzeughalters 13c, 13d, 13e verfahren werden kann. Wie es insbesondere den Figuren 5a und 5b zu entnehmen ist, kann der Werkzeughalter 13c dazu insbesondere ein Antriebselement 131 aufweisen, welches dazu ausgelegt ist, eine verfahrbare Welle 132 entlang der Längsrichtung L des Werkzeughalters 13c zu verfahren. Erfindungsgemäss ist der Werkzeugeinsatz dabei derart an der verfahrbaren Welle 132 angeordnet, dass der Werkzeugeinsatz mit der verfahrbaren Welle entlang der Längsachse L des Werkzeughalters 13c verfahren werden kann.

Mit Hinblick auf die spezielle Ausführungsform in Fig. 5b sei angemerkt, dass es nicht nur denkbar ist, den Werkzeugeinsatz (nicht dargestellt) direkt mit der verfahrbaren Welle 132 zu verbinden. Vielmehr ist es auch vorstellbar, einen weiteren Werkzeughalter 13b an der verfahrbaren Welle 132 des ersten Werkzeughalters 13c anzubringen. Insbesondere entspricht der zweite Werkzeughalter 13b gemäss Fig. 5b im Wesentlichen dem aus der zweiten Ausführungsform gemäss Fig. 1b bekannten Werkzeughalter 13b. Im Übrigen wäre es analog zur Ausführungsform gemäss Figur 5b erfindungsgemäss auch möglich, die aus der Fig. 1a bekannte erste Ausführungsform der Bearbeitungsvorrichtung 1 durch einen Werkzeughalter 13b zu erweitern, so dass auch diese dazu ausgebildet ist, zwei Werkzeugeinsätze 14 aufnehmen zu können.

Die in den Figuren 5a bis 5e dargestellten Ausführungsformen der Bearbeitungsvorrichtung 1 können insbesondere dazu ausgebildet sein, den Werkzeugeinsatz hydraulisch oder elektrisch entlang der Längsachse L des Werkzeughalters 13c, 13d, 13e zu verfahren. Dadurch werden vorteilhafterweise eine hohe Ansteuergeschwindigkeit sowie ein fast unbegrenzter Verfahrweg ermöglicht.

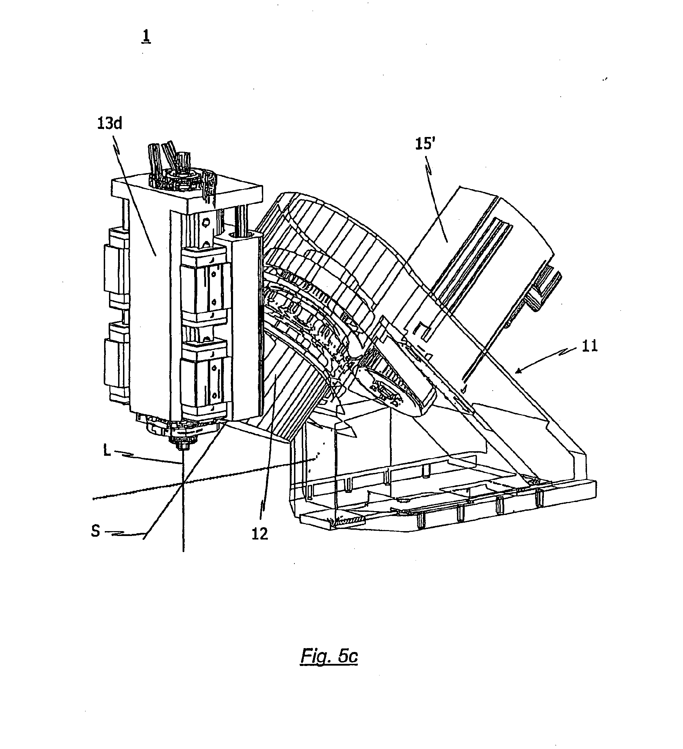

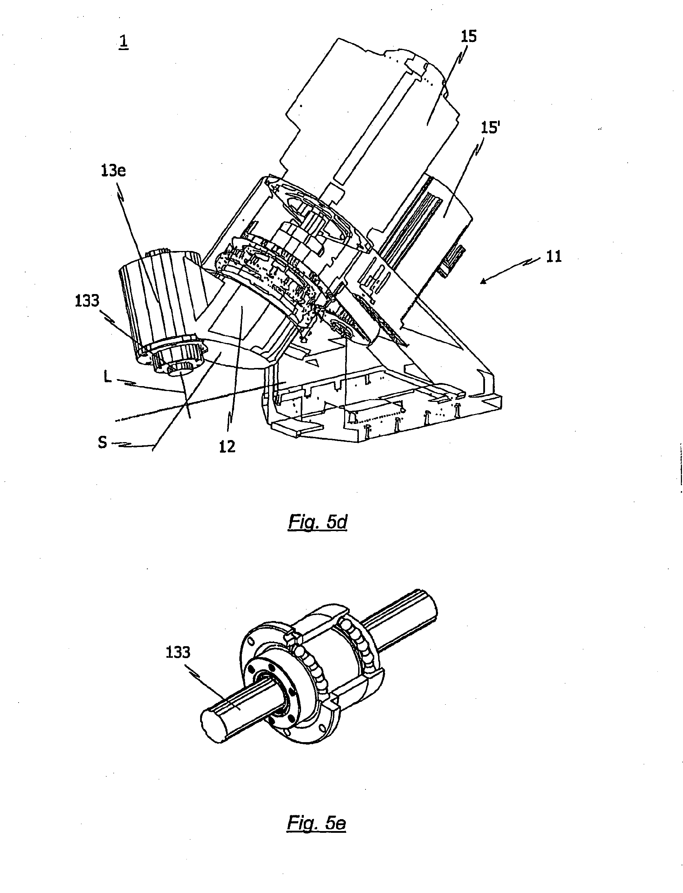

Wie in den Figuren 5c und 5d dargestellt, können die Werkzeughalter 13d, 13e, zum Verfahren des Werkzeugeinsatzes, ein Schlittenelement (Fig. 5c) oder eine Nutwel-1e (Figuren 5d, 5e) aufweisen. Das in Fig. 5c dargestellte Schlittenelement kann dabei insbesondere elektrisch, vorteilhafterweise magnetisch, angesteuert werden, während die Nutwelle 133 vorzugsweise durch eine Hydraulik betätigbar ist. In Fig. 5e ist die aus Fig. 5d bekannte Nutwelle 133 des Werkzeughalters 13e dargestellt. Die Nutwelle 133 kann insbesondere über ein Wälzlager frei rotierbar innerhalb einer Gehäusestruktur des Werkzeughalters 13e gelagert sein.

Im Übrigen sei mit Bezug auf die Figuren 5c und 5d weiterhin angemerkt, dass die erfindungsgemässe Bearbeitungsvorrichtung alternativ oder zusätzlich auch über eine zweite Motoranordnung 15' betrieben werden kann. Diese zweite Motoranordnung kann über einen Riemen (oder Kette usw.) mit der Getriebeanordnung (nicht dargestellt) verbunden sein, um die Schwenkwelle bzw. die Antriebswelle (nicht dargestellt) zu bewegen. Während in der Ausführungsform gemäss Figur 5c lediglich die zweite Motoranordnung 15' dazu dient, die Getriebeanordnung anzutreiben, ist es bei der Ausführungsform gemäss Fig. 5d vorgesehen, eine erste und eine zweite Motoranordnung 15, 15' gleichzeitig zu betreiben. Wie weiter unten näher beschrieben wird, ist es somit entweder möglich, die Schwenkachse und die Antriebsachse nacheinander zu bewegen (Fig. 5c), oder beide gleichzeitig unabhängig voneinander anzusteuern (Fig. 5d).

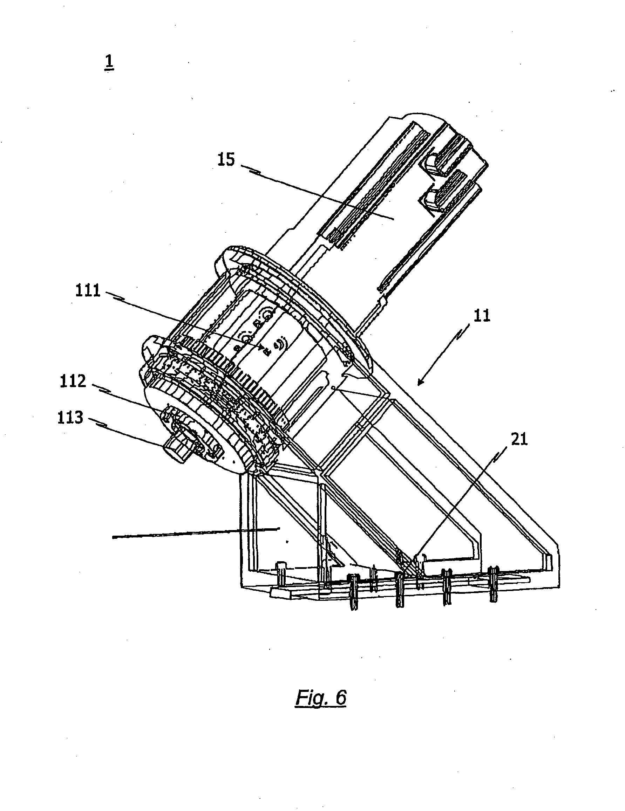

Wie der vergrösserten Darstellung des Grundkörpers 11 in Fig. 6 zu entnehmen ist, kann die Getriebeanordnung 111 vorteilhafterweise mindestens eine Schwenkwelle 112 zum Schwenken des Schwenkkopfes 12, sowie mindestens eine Antriebswelle 113 zum Antreiben eines Werkzeugeinsatzes (hier nicht dargestellt) aufweisen. Die Getriebeanordnung 111 kann beispielsweise durch eine erste Motoranordnung 15 angetrieben werden und dient ihrerseits dazu, die Schwenkwelle 112 sowie die mindestens eine Antriebswelle 113 anzutreiben. Dementsprechend kann durch die Getriebeanordnung der erfindungsgemässen Bearbeitungsvorrichtung ein Verschwenken des Schwenkkopfes 12 sowie das Antreiben eines Werkzeugeinsatzes mit einer einzigen Motoranordnung 15 ausgeführt werden. Somit kann vorteilhafterweise auf einen separaten Motor innerhalb des am Schwenkkopf angebrachten Werkzeughalters verzichtet werden, wodurch dieser ein geringeres Gewicht aufweist.

Eine Schnittdarstellung der mit Bezug auf Fig. 6 erwähnten Getriebeanordnung 111 ist der Fig. 7 zu entnehmen. Die dargestellte Getriebeanordnung 111 der erfindungsgemässen Bearbeitungsvorrichtung kann dabei eine erste Klemmvorrichtung 115 zum Festlegen der mindestens einen Antriebswelle 113 aufweisen. Die erste Klemmvorrichtung 115 zum Festlegen der mindestens einen Antriebswelle 113 kann insbesondere durch hydraulische und/oder pneumatische Ansteuerung gegen die Antriebswelle 113 gepresst werden, um ein ungewolltes Rotieren der Antriebswelle 113 wirkungsvoll zu verhindern. Äquivalent dazu kann die Getriebeanordnung 111 ferner eine zweite Klemmvorrichtung 114 zum Festlegen der mindestens einen Schwenkwelle 112 aufweisen. Im Gegensatz zur ersten Klemmvorrichtung 115 kann die zweite Klemmvorrichtung 114 dazu genutzt werden, durch hydraulische und/oder pneumatische Ansteuerung die Schwenkwelle 112 festzulegen, um ein ungewolltes Verschwenken der Schwenkwelle 112 zu verhindern. Im Einzelnen kann somit mittels der ersten und zweiten Klemmvorrichtung 114, 115 jeweils eine der Wellen angetrieben werden, während die andere Welle durch die Klemmvorrichtung 114 oder 115 festgelegt wird, wodurch gewährleistet ist, dass stets lediglich eine Welle 112 oder 113 in Betrieb ist. Es ist folglich nicht möglich, dass der Schwenkkopf während der Bearbeitung des Werkstückes durch den Werkzeugeinsatz versehentlich verschwenkt wird. Mit anderen Worten ist während der Bearbeitung lediglich die Antriebswelle 113 aktiv, während die Schwenkwelle 112 festgelegt ist. Erst nachdem der individuelle Bearbeitungsschritt beendet ist, wird die Antriebswelle 113 und damit der Werkzeugeinsatz festgelegt und durch Ansteuerung der Schwenkwelle 112 der Schwenkkopf verschwenkt. Alternativ ist es jedoch auch denkbar, dass im Sinne spezieller Bearbeitungsmethoden beide Wellen, d.h. die Antriebswelle 113 sowie die Schwenkwelle 112 gleichzeitig betrieben werden können.

Es ist dabei besonders vorteilhaft, wenn die erfindungsgemässe erste Klemmvorrichtung 115 einen ersten Zustand, in welchem die mindestens eine Antriebswelle 113 frei rotierbar ist, sowie einen zweiten Zustand, in welchem die mindestens eine Antriebswelle 113 unbeweglich festgelegt ist, aufweist, wobei die erste Klemmvorrichtung 115 derart ausgebildet ist, dass die erste Klemmvorrichtung erst durch Anlegen einer pneumatischen und/oder hydraulischen Druckkraft vom ersten Zustand in den zweiten Zustand überführt werden kann. Dadurch ist die Antriebswelle 113 in der Grundeinstellung der ersten Klemmvorrichtung 115 frei rotierbar. Erst nach Ansteuerung der ersten Klemmvorrichtung 115 durch eine hydraulische und/oder pneumatische Druckkraft wird diese in ihren zweiten Zustand überführt, um die Antriebswelle 113 festzulegen. Im Gegensatz dazu kann die zweite Klemmvorrichtung 114 einen ersten Zustand, in welchem die mindestens eine Schwenkwelle 112 unbeweglich festgelegt ist, sowie einen zweiten Zustand, in welchem die mindestens eine Schwenkwelle 112 frei rotierbar ist, aufweisen, wobei die zweite Klemmvorrichtung 114 derart ausgebildet ist, dass die zweite Klemmvorrichtung 114 durch Anlegen einer pneumatischen und/oder hydraulischen Druckkraft vom ersten Zustand in den zweiten Zustand überführt werden kann. Dementsprechend ist die zweite Klemmvorrichtung 114 genau gegenteilig zur ersten Klemmvorrichtung 115 ausgebildet. Somit ist die zweite Klemmvorrichtung 114 gewissermassen vorgespannt, um die mindestens eine Schwenkwelle 112 im Grundzustand unbeweglich festzulegen. Erst nach Beendigung eines individuellen Bearbeitungsschrittes wird die zweite Klemmvorrichtung 114 durch eine pneumatische und/oder hydraulische Druckkraft in ihren zweiten Zustand überführt, um ein Rotieren der Schwenkwelle 112 und damit ein Verschwenken des Schwenkkopfes zu ermöglichen.

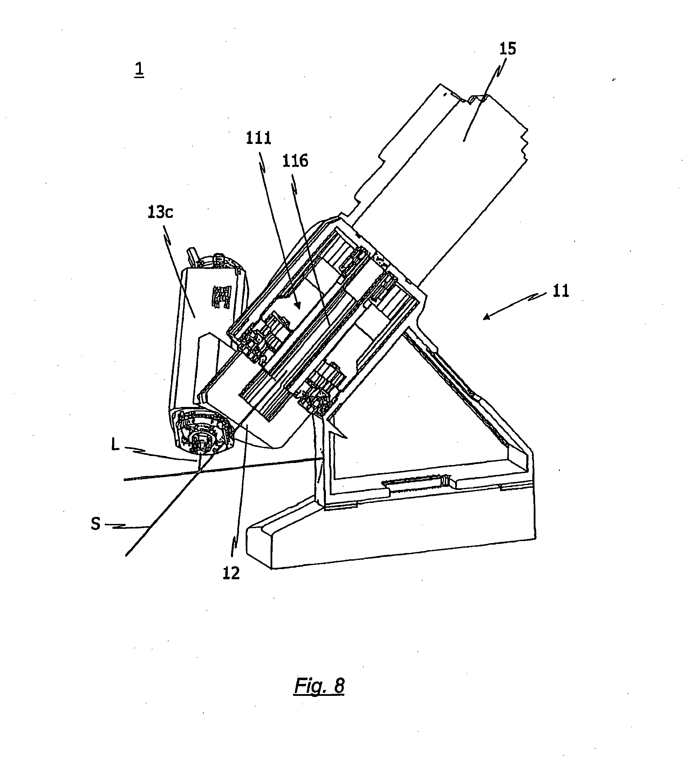

Das in Fig. 8 dargestellte Ausführungsbeispiel zeigt einen Querschnitt durch den Grundkörper 11 sowie den Schwenkkopf 12 einer erfindungsgemässen Bearbeitungsvorrichtung 1. Dabei ist insbesondere dargestellt, dass die Getriebeanordnung einer alternativen Ausführungsform der erfindungsgemässen Bearbeitungsvorrichtung einen Hohlwellenantrieb 116 zum Antreiben der mindestens einen Schwenkwelle 112 sowie der mindestens einen Antriebswelle 113 aufweist. Durch das Vorsehen eines Hohlwellenantriebs 116 innerhalb der Getriebeanordnung 111 kann eine hohe Positioniergenauigkeit des Schwenkkopfes 12 an vorbestimmten absoluten Positionen mit einer Genauigkeit von vorzugsweise +/- 20 Winkelminuten erreicht werden.

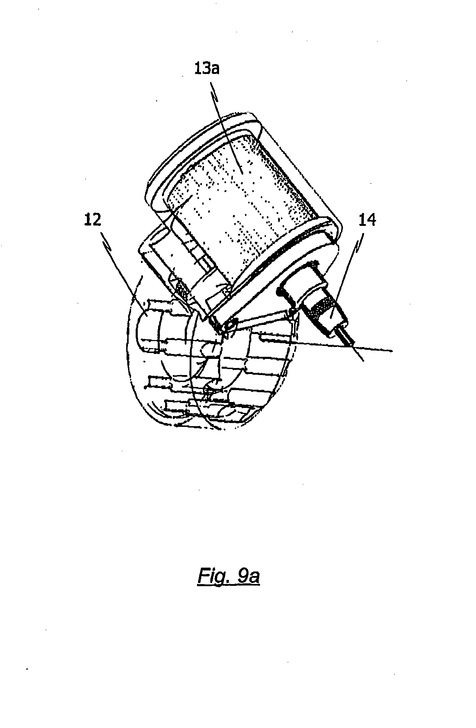

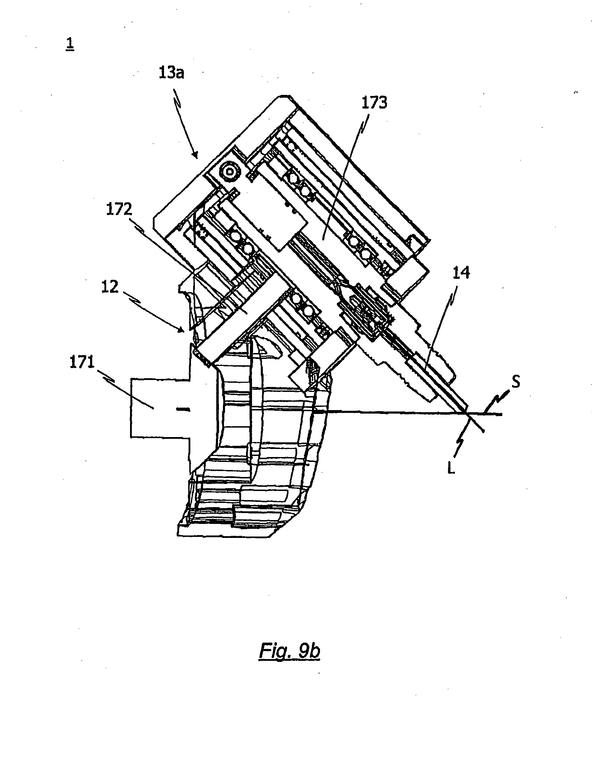

In den Figuren 9a und 9b ist noch einmal ein Schwenkkopf 12 mit Werkzeughalter 13a gemäss der in Fig. 1a dargestellten Ausführungsform dargestellt. Vor allem aus der in Fig. 9b gezeigten Schnittdarstellung des Schwenkkopfes 12 mit Werkzeughalter 13a lässt sich sehr einfach erkennen, dass der Werkzeughalter 13a derart am Umfang des Schwenkkopfes 12 angeordnet ist, dass die Längsachse L des Werkzeughalters 13a unter einem Winkel von 45° gegenüber der Schwenk-/Antriebsachse S des Schwenkkörpers 12 angeordnet ist. Ferner lässt sich aus den Figuren 9a und 9b erkennen, dass die erfindungsgemässe Bearbeitungsvorrichtung vorteilhafterweise ein Umlenkgetriebe aufweist, welches dazu ausgebildet ist, ein Drehmoment der mindestens einen Antriebswelle 113 auf den mindestens einen Werkzeugeinsatz 14 zu übertragen. Insbesondere kann das Umlenkgetriebe dabei als Kronenrand- bzw. Kegelradgetriebe ausgebildet sein. Der Schwenkkopf 12 besteht insbesondere aus einem ersten Kegelrad 171, welches die Rotationsbewegung der Antriebswelle auf ein unter 45° zur Antriebs-/Schwenkachse S ausgerichtetes Zahnrad 172 überträgt. Das Zahnrad 172 überträgt die Rotationsbewegung schliesslich auf eine Antriebswelle 173 des Werkzeughalters 13a. Ein Werkzeugeinsatz 14 ist mit der Antriebswelle 173 des Werkzeughalters 13a verbunden und wird somit durch das Umlenkgetriebe von der Rotationsbewegung der Antriebswelle betrieben.

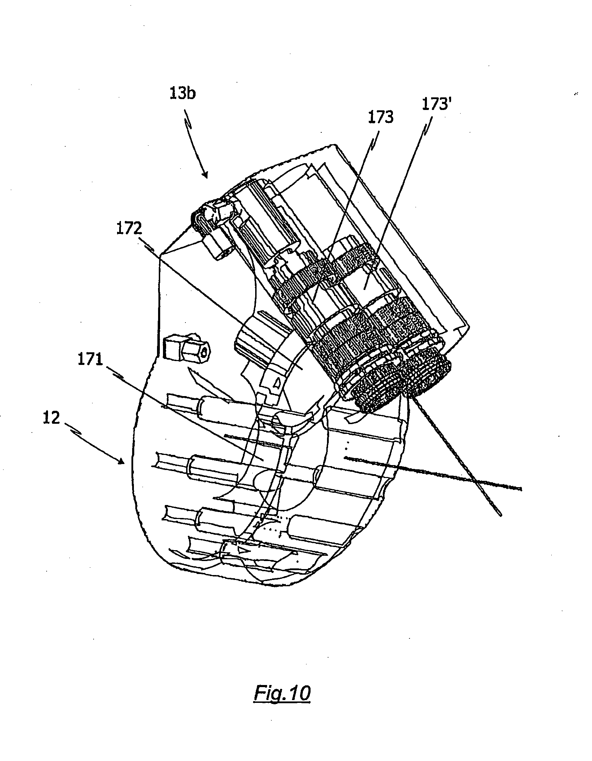

Eine ähnliche Ausführungsform ist in Fig. 10 dargestellt. Insbesondere handelt es sich bei der in Fig. 10 dargestellten Ausführungsform um den aus Fig. 1b bekannten Werkzeughalter 13b, welcher im Winkel von 45° am Schwenkkopf 12 angeordnet ist. Im Gegensatz zu den in den Figuren 9a und 9b dargestellten Ausführungsformen des Umlenkgetriebes dient das in Fig. 10 dargestellte Umlenkgetriebe dazu, gleichzeitig zwei Antriebswellen 173, 173' des Werkzeughalters 13b anzutreiben.

Zurückkommend auf die Figuren 1a und 1b sei erwähnt, dass nach einem weiteren Aspekt der erfindungsgemässen Bearbeitungsvorrichtung der Grundkörper 11 zum translatorischen Verfahren der Bearbeitungsvorrichtung 1 gegenüber dem Bearbeitungstisch, lösbar an einer Führungsvorrichtung 2 befestigt sein kann. Die Führungsvorrichtung 2 kann vorteilhafterweise dazu verwendet werden, den Grundkörper 11 und damit die Bearbeitungsvorrichtung 1 in allen drei Raumrichtungen zu verfahren, wodurch die erfindungsgemässe Bearbeitungsvorrichtung 1 auf einfache Weise gegenüber dem Werkstück 3 ausgerichtet werden kann. Der Grundkörper 11 kann dabei insbesondere durch Verbindungselemente lösbar mit der Führungsvorrichtung 2 verbunden sein, wodurch es auf einfache Weise möglich ist, die erfindungsgemässe Bearbeitungsvorrichtung 1 für Reparaturzwecke von der Führungsvorrichtung 2 zu entfernen.

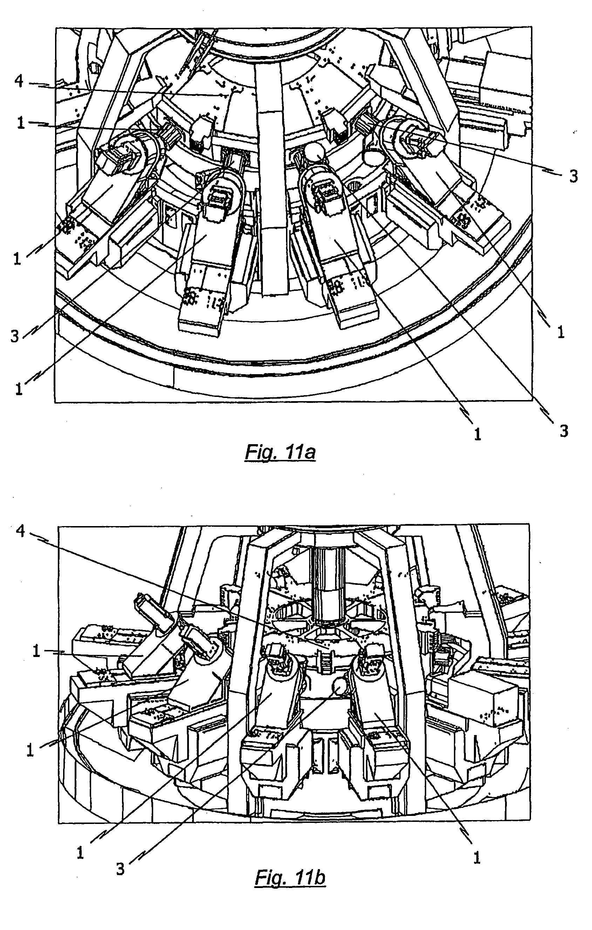

In den Figuren 11a und 11b ist eine erste Ausführungsform einer erfindungsgemässen Rundtaktmaschine dargestellt. Die Rundtaktmaschine weist eine Vielzahl von erfindungsgemässen Bearbeitungsvorrichtungen 1 auf, welche derart um den Bearbeitungstisch 4 angeordnet sind, dass die mit dem Bearbeitungstisch 4 verbundenen Werkstücke 3 problemlos durch die Bearbeitungsvorrichtungen 1 bearbeitet werden können.

## Patentansprüche

1. Bearbeitungsvorrichtung (1) zur Bearbeitung von Werkstücken (3) einer Rundtaktmaschine mit Bearbeitungstisch (4), wobei die Bearbeitungsvorrichtung (1) folgendes aufweist:
- einen Grundkörper (11), welcher sich entlang einer zu einem Bearbeitungstisch (4) geneigt ausgerichteten Hauptachse (A) erstreckt und eine Getriebeanordnung (111) mit einer senkrecht zur Hauptachse ausgerichteten Schwenk-/Antriebsachse (S) aufweist;
- einen Schwenkkopf (12), welcher an einer dem Werkstück (3) zugewandten Position am Grundkörper (11) schwenkbar gelagert ist und entlang der Schwenk-/Antriebsachse (S) des Grundkörpers (11) ausgerichtet ist;
- einen Werkzeughalter (13a, 13b, 13c, 13d, 13e), welcher mit dem Schwenkkopf (S) verbunden ist und dazu ausgelegt ist, mindestens einen Werkzeugeinsatz (14) zur Bearbeitung der Werkstücke (3) aufzunehmen,
wobei der Werkzeughalter (13a, 13b, 13c, 13d, 13e) derart an einem Umfang des Schwenkkopfes (12) angebracht ist, dass eine Längsachse (L) des Werkzeughalters (13a, 13b, 13c, 13d, 13e) geneigt gegenüber der Schwenk-/Antriebsachse (S) angeordnet ist,
**dadurch gekennzeichnet, dass**
die Bearbeitungsvorrichtung (1) ferner mindestens einen Werkzeugeinsatz (14) zur Bearbeitung der Werkstücke (3) aufweist, welcher derart von dem Werkzeughalter (13a, 13b, 13c, 13d, 13e) aufgenommen ist, dass eine Spitze des Werkzeugeinsatzes (14) im Schnittpunkt der Längsachse (L) des Werkzeughalters mit der Schwenk-/Antriebsachse (S) liegt.

2. Bearbeitungsvorrichtung (1) nach Anspruch 1,
wobei die Bearbeitungsvorrichtung (1) derart ausgebildet ist, dass der mindestens eine Werkzeugeinsatz (14) entlang der Längsachse (L) des Werkzeughalters (13a, 13b, 13c, 13d, 13e) verfahren werden kann.

3. Bearbeitungsvorrichtung (1) nach Anspruch 2,
wobei die Bearbeitungsvorrichtung (1) dazu ausgebildet ist, den Werkzeugeinsatz (14) hydraulisch oder elektrisch entlang der Längsachse (L) des Werkzeughalters (13a, 13b, 13c, 13d, 13e) zu verfahren.

4. Bearbeitungsvorrichtung (1) nach Anspruch 2 oder 3,
wobei der Werkzeughalter (13a, 13b, 13c, 13d, 13e) mindestens ein Schlittenelement aufweist, welches dazu ausgelegt ist, den Werkzeugeinsatz (14) entlang der Längsachse (L) des Werkzeughalters zu verfahren.

5. Bearbeitungsvorrichtung (1) nach Anspruch 3 oder 4,
wobei der Werkzeughalter (13a, 13b, 13c, 13d, 13e) mindestens eine Nutwelle aufweist, welche dazu ausgelegt ist, den Werkzeugeinsatz (14) entlang der Längsachse (L) des Werkzeughalters zu verfahren.

6. Bearbeitungsvorrichtung (1) nach einem der vorhergehenden Ansprüche,
wobei die Getriebeanordnung (111) des Grundkörpers (11) mindestens eine Schwenkwelle (112) zum Schwenken des Schwenkkopfes (12) sowie mindestens eine Antriebswelle (113) zum Antreiben eines Werkzeugeinsatzes (14) aufweist, und zum Antreiben der mindestens einen Schwenkwelle (112) sowie der mindestens einen Antriebswelle (113) ausgebildet ist.

7. Bearbeitungsvorrichtung (1) nach Anspruch 6,
wobei die Getriebeanordnung (111) eine erste Klemmvorrichtung (115) zum Festlegen der mindestens einen Antriebswelle (113) sowie eine zweite Klemmvorrichtung (114) zum Festlegen der mindestens einen Schwenkwelle (112) aufweist.

8. Bearbeitungsvorrichtung (1) nach Anspruch 7,
wobei die erste Klemmvorrichtung (115) einen ersten Zustand, in welchem die mindestens eine Antriebswelle (113) frei rotierbar ist, sowie einen zweiten Zustand, in welchem die mindestens eine Antriebswelle (113) unbeweglich festgelegt ist, aufweist, wobei die erste Klemmvorrichtung (115) derart ausgebildet ist, dass sie durch Anlegen einer hydraulischen oder pneumatischen Druckkraft vom ersten Zustand in den zweiten Zustand überführt werden kann.

9. Bearbeitungsvorrichtung (1) nach Anspruch 7 oder 8,
wobei die zweite Klemmvorrichtung (114) einen ersten Zustand, in welchem die mindestens eine Schwenkwelle (112) unbeweglich festgelegt ist, sowie einen zweiten Zustand, in welchem die mindestens eine Schwenkwelle (112) frei rotierbar ist, aufweist, wobei die zweite Klemmvorrichtung (114) derart ausgebildet ist, dass sie durch Anlegen einer hydraulischen oder pneumatischen Druckkraft vom ersten Zustand in den zweiten Zustand überführt werden kann,

10. Bearbeitungsvorrichtung (1) nach einem der Ansprüche 6 bis 9,
wobei die Getriebeanordnung (111) einen Hohlwellenantrieb (116) zum Antreiben der mindestens einen Schwenkwelle (112) sowie der mindestens einen Antriebswelle (113) aufweist.

11. Bearbeitungsvorrichtung (1) nach einem der Ansprüche 6 bis 10,
wobei die Bearbeitungsvorrichtung (1) ein Umlenkgetriebe (17) aufweist, welches dazu ausgebildet ist, ein Drehmoment der mindestens einen Antriebswelle (113) auf den mindestens einen Werkzeugeinsatz (14) zu übertragen.

12. Bearbeitungsvorrichtung (1) nach einem der vorhergehenden Ansprüche,
wobei der Grundkörper (11) zum translatorischen Verfahren der Bearbeitungsvorrichtung (1) gegenüber dem Bearbeitungstisch (4) lösbar an einer Führungsvorrichtung (2) befestigt ist.

13. Bearbeitungsvorrichtung (1) nach einem der vorhergehenden Ansprüche, wobei der Grundkörper (11) unter einem Winkel von 45° zum Bearbeitungstisch (4) geneigt ausgerichtet ist.

14. Bearbeitungsvorrichtung (1) nach einem der vorhergehenden Ansprüche, wobei die Längsachse (L) des Werkzeughalters (13a, 13b, 13c, 13d, 13e) in einem Winkel von 45° gegenüber der Schwenk-/Antriebsachse (S) angeordnet ist.

15. Rundtaktmaschine zur Bearbeitung von einem oder mehreren Werkstücken (3) in einem oder mehreren Bearbeitungsschritten, wobei die Rundtaktmaschine einen Bearbeitungstisch (4) sowie mindestens eine Bearbeitungsvorrichtung (1) nach einem der vorhergehenden Ansprüche aufweist.

## Claims

1. Processing device (1) for processing workpieces (3) of a rotary indexing machine with processing table (4), wherein the processing device comprises the following:
- a base body (11) which extends along a principal axis (A) oriented at an incline to the processing table (4), and a gearbox arrangement (111) with a pivot/drive axis (S) oriented perpendicular to the principal axis;
- a pivot head (12) which is pivotably mounted on the base body (11) at a position facing the workpiece (3) and oriented along the pivot/drive axis (S) of the base body (11);
- a tool holder (13a, 13b, 13c, 13d, 13e) which is connected to the pivot head (S) and is designed to hold at least one tool insert (14) for processing the workpieces (3),
wherein the tool holder (13a, 13b, 13c, 13d, 13e) is mounted on a circumference of the pivot head (12) in such a manner that a longitudinal axis (L) of the tool holder (13a, 13b, 13c, 13d, 13e) is inclined relative to the pivot/drive axis (S),
**characterized in that**
the processing device (1) additionally comprises at least one tool insert (14) for processing the workpieces (3), which is held by the tool holder (13a, 13b, 13c, 13d, 13e) in such a manner that a tip of the tool insert (14) is located at the intersection of the longitudinal axis (L) of the tool holder with the pivot/drive axis (S).

2. Processing device (1) according to Claim 1,
wherein the processing device (1) is designed in such a manner that the at least one tool insert (14) can be moved along the longitudinal axis (L) of the tool holder (13a, 13b, 13c, 13d, 13e).

3. Processing device (1) according to Claim 2,
wherein the processing device (1) is designed to move the tool insert (14) hydraulically or electrically along the longitudinal axis (L) of the tool holder (13a, 13b, 13c, 13d, 13e).

4. Processing device (1) according to Claim 2 or 3,
wherein the tool holder (13a, 13b, 13c, 13d, 13e) has at least one carriage element, which is designed to move the tool insert (14) along the longitudinal axis (L) of the tool holder.

5. Processing device (1) according to Claim 3 or 4,
wherein the tool holder (13a, 13b, 13c, 13d, 13e) has at least one spline shaft, which is designed to move the tool insert (14) along the longitudinal axis (L) of the tool holder.

6. Processing device (1) according to any one of the preceding claims,
wherein the gearbox arrangement (111) of the base body (11) comprises at least one pivot shaft (112) for pivoting the pivot head (12) and at least one drive shaft (113) for driving a tool insert (14), and is designed for driving the at least one pivot shaft (112) and the at least one drive shaft (113).

7. Processing device (1) according to Claim 6,
wherein the gearbox arrangement (111) comprises a first clamping device (115) for locking the at least one drive shaft (113) and a second clamping device (114) for locking the at least one pivot shaft (112).

8. Processing device (1) according to Claim 7,
wherein the first clamping device (115) has a first state in which the at least one drive shaft (113) is freely rotatable, and a second state in which the at least one drive shaft (113) can be locked in position, wherein the first clamping device (115) is designed in such a manner that it can be transferred from the first state to the second state by application of a hydraulic or pneumatic compressive force.

9. Processing device (1) according to Claim 7 or 8,
wherein the second clamping device (114) has a first state in which the at least one pivot shaft (112) is locked in position, and a second state in which the at least one pivot shaft (112) is freely rotatable, wherein the second clamping device (114) is designed in such a manner that it can be transferred from the first state to the second state by application of a hydraulic or pneumatic compressive force.

10. Processing device (1) according to any one of Claims 6 to 9,
wherein the gearbox arrangement (111) comprises a hollow shaft drive (116) for driving the at least one pivot shaft (112) and the at least one drive shaft (113).

11. Processing device (1) according to any one of Claims 6 to 10,
wherein the processing device (1) has a deflection gearbox (17) which is designed to transfer a torque from the at least one drive shaft (113) onto the at least one tool insert (14).

12. Processing device (1) according to any one of the preceding claims,
wherein the base body (11) is detachably fastened to a guiding device (2) for the translatory movement of the processing device (1) relative to the processing table (4).

13. Processing device (1) according to any one of the preceding claims,
wherein the base body (11) is oriented at an incline at an angle of less than 45 degrees to the processing table (4).

14. Processing device (1) according to any one of the preceding claims,
wherein the longitudinal axis (L) of the tool holder (13a, 13b, 13c, 13d, 13e) is arranged at an angle of 45 degrees with respect to the pivot/drive axis (S).

15. Rotary indexing machine for processing one or more workpieces (3) in one or more processing steps,
wherein the rotary indexing machine comprises a processing table (4) and at least one processing device (1) according to any one of the preceding claims.

## Revendications

1. Dispositif d'usinage (1) pour l'usinage de pièces (3) d'une machine à transfert rotatif avec table de travail (4), le dispositif d'usinage (1) présentant ce qui suit:
- un corps de base (11), lequel s'étend le long d'un axe principal (A) orienté de manière inclinée par rapport à une table de travail (4) et présente un agencement d'entraînement (111) avec un axe d'entraînement et de pivotement (S) orienté perpendiculairement à l'axe principal;
- une tête pivotante (12), laquelle est montée de manière à pouvoir pivoter sur le corps de base (11) dans une position tournée vers la pièce (3) et est orientée le long de l'axe d'entraînement et de pivotement (S) du corps de base (11);
- un porte-outils (13a, 13b, 13c, 13d, 13e), lequel est relié à la tête pivotante (S) et est étudié de manière à accueillir au moins un montage d'outil (14) pour l'usinage des pièces (3),
le porte-outils (13a, 13b, 13c, 13d, 13e) étant apposé sur un pourtour de la tête pivotante (12) de manière à ce qu'un axe longitudinal (L) du porte-outils (13a, 13b, 13c, 13d, 13e) soit disposé de manière inclinée par rapport à l'axe d'entraînement et de pivotement (S),
**caractérisé en ce que**
le dispositif d'usinage (1) présente en outre au moins un montage d'outil (14) pour l'usinage des pièces (3), lequel est accueilli par le porte-outils (13a, 13b, 13c, 13d, 13e) de manière à ce qu'une pointe du montage d'outil (14) se situe au point d'intersection entre l'axe longitudinal (L) du porte-outils et l'axe d'entraînement et de pivotement (S).

2. Dispositif d'usinage (1) selon la revendication 1,
dans lequel le dispositif d'usinage (1) est réalisé de manière à ce que l'au moins un montage d'outil (14) puisse être déplacé le long de l'axe longitudinal (L) du porte-outils (13a, 13b, 13c, 13d, 13e).

3. Dispositif d'usinage (1) selon la revendication 2,
dans lequel le dispositif d'usinage (1) est conçu pour déplacer le montage d'outil (14) de manière hydraulique ou électrique le long de l'axe longitudinal (L) du porte-outils (13a, 13b, 13c, 13d, 13e).

4. Dispositif d'usinage (1) selon les revendications 2 ou 3,
dans lequel le porte-outils (13a, 13b, 13c, 13d, 13e) présente au moins un élément de chariot, lequel est étudié pour déplacer le montage d'outil (14) le long de l'axe longitudinal (L) du porte-outils.

5. Dispositif d'usinage (1) selon les revendications 3 ou 4,
dans lequel le porte-outils (13a, 13b, 13c, 13d, 13e) présente au moins un arbre cannelé, lequel est étudié pour déplacer le montage d'outil (14) le long de l'axe longitudinal (L) du porte-outils.

6. Dispositif d'usinage (1) selon l'une des revendications précédentes,
dans lequel l'agencement d'entraînement (111) du corps de base (11) présente au moins un arbre de pivotement (112) pour faire pivoter la tête pivotante (12) ainsi qu'au moins un arbre d'entraînement (113) pour entraîner un montage d'outil (14), et est réalisé pour l'entraînement de l'au moins un arbre de pivotement (112) ainsi que de l'au moins un arbre d'entraînement (113).

7. Dispositif d'usinage (1) selon la revendication 6,
dans lequel l'agencement d'entraînement (111) présente un premier dispositif de serrage (115) pour la fixation de l'au moins un arbre d'entraînement (113) ainsi qu'un deuxième dispositif de serrage (114) pour la fixation de l'au moins un arbre de pivotement (112).

8. Dispositif d'usinage (1) selon la revendication 7,
dans lequel le premier dispositif de serrage (115) présente un premier état dans lequel l'au moins un arbre d'entraînement (113) est librement rotatif, ainsi qu'un deuxième état dans lequel l'au moins un arbre d'entraînement (113) est fixé de manière immobile, le premier dispositif de serrage (115) étant conçu de manière à ce qu'il soit possible de le faire passer du premier état au deuxième état grâce à l'application d'une force de pression hydraulique ou pneumatique.

9. Dispositif d'usinage (1) selon les revendications 7 ou 8,
dans lequel le deuxième dispositif de serrage (114) présente un premier état dans lequel l'au moins un arbre de pivotement (112) est fixé de manière immobile, ainsi qu'un deuxième état dans lequel l'au moins un arbre de pivotement (112) est librement rotatif, le deuxième dispositif de serrage (114) étant conçu de manière à ce qu'il soit possible de le faire passer du premier état au deuxième état grâce à l'application d'une force de pression hydraulique ou pneumatique.

10. Dispositif d'usinage (1) selon l'une des revendications 6 à 9,
dans lequel l'agencement d'entraînement (111) présente un entraînement à arbre creux (116) pour entraîner l'au moins un arbre de pivotement (112) ainsi que l'au moins un arbre d'entraînement (113).

11. Dispositif d'usinage (1) selon l'une des revendications 6 à 10,
dans lequel le dispositif d'usinage (1) présente une transmission de renvoi (17), laquelle est étudiée pour retransmettre un couple de rotation de l'au moins un arbre d'entraînement (113) à l'au moins un montage d'outil (14).

12. Dispositif d'usinage (1) selon l'une des revendications précédentes,
dans lequel le corps de base (11) est fixé de manière détachable à un dispositif de guidage (2) pour le déplacement de translation du dispositif d'usinage (1) par rapport à la table de travail (4).

13. Dispositif d'usinage (1) selon l'une des revendications précédentes,
dans lequel le corps de base (11) est orienté de manière inclinée selon un angle de 45° par rapport à la table de travail (4).

14. Dispositif d'usinage (1) selon l'une des revendications précédentes,
dans lequel l'axe longitudinal (L) du porte-outils (13a, 13b, 13c, 13d, 13e) est disposé selon un angle de 45° degrés par rapport à l'axe d'entraînement et de pivotement (S).

15. Machine à transfert circulaire pour l'usinage d'une ou plusieurs pièces (3) en une ou plusieurs étapes d'usinage,
dans lequel la machine à transfert circulaire présentant une table de travail (4) ainsi qu'au moins un dispositif d'usinage (1) selon l'une des revendications précédentes.
